(19) **Europäisches Patentamt / European Patent Office / Office européen des brevets**

(11) **EP 3 537 555 A1**

(12) # EUROPÄISCHE PATENTANMELDUNG

(43) Veröffentlichungstag:
**11.09.2019 Patentblatt 2019/37**

(51) Int Cl.:
**H02J 3/32** (2006.01)     **H02J 7/00** (2006.01)

(21) Anmeldenummer: **19153662.2**

(22) Anmeldetag: **25.01.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.03.2018   DE 102018203528**

(71) Anmelder: **Siemens Aktiengesellschaft**
**80333 München (DE)**

(72) Erfinder:
- **Betzin, Christopher**
  **91301 Forchheim (DE)**
- **Wolfschmidt, Holger**
  **91058 Erlangen (DE)**

(54) **VERFAHREN ZUM BETRIEB EINES ENERGIESYSTEMS UND ENERGIESYSTEM**

(57)    Es wird ein Verfahren zum Betrieb eines Energiesystems mit wenigstens einem ersten und einem zweiten Energiespeicher vorgeschlagen, bei dem eine Lastanforderung an das Energiesystem durch eine Bereitstellung einer Gesamtleistung gedeckt wird, und welches wenigstens die folgenden Schritte umfasst:
- Bereitstellen der Gesamtleistung mittels einer ersten Teilleistung, die durch den ersten Energiespeicher bereitgestellt wird, und mittels einer zweiten Teilleistung, die durch den zweiten Energiespeicher bereitgestellt wird; wobei
- jede der Teilleistungen in Abhängigkeit einer ladezustandsabhängigen Alterung des jeweiligen Energiespeichers ermittelt wird.
Weiterhin betrifft die Erfindung ein Energiesystem, das zur Durchführung eines Verfahrens gemäß der vorliegenden Erfindung oder einer ihrer Ausgestaltungen ausgebildet ist.

FIG 1

EP 3 537 555 A1

**Beschreibung**

Die Erfindung betrifft ein Verfahren zum Betrieb eines Energiesystems mit wenigstens einem ersten und zweiten Energiespeicher, bei dem eine Lastanforderung an das Energiesystem durch eine Bereitstellung einer Gesamtleistung gedeckt wird. Weiterhin betrifft die Erfindung ein Energiesystem, das zur Durchführung eines Verfahrens gemäß der vorliegenden Erfindung und/oder einer ihrer Ausgestaltungen ausgebildet ist.

Energiesysteme, insbesondere Batteriespeichersysteme, können zur Speicherung von Energie, typischerweise elektrischer Energie, sowie für Dienstleistungen an Stromnetzen herangezogen werden. Insbesondere sind Batteriespeichersysteme für die Erbringung einer primären Regelleistung für das Stromnetz von Vorteil, da diese Energie sowohl aufnehmen als auch abgeben können und weiterhin schnelle Reaktionszeiten aufweisen. Hierbei sind die Reaktionszeiten kürzer als das für eine Primärregelleistung erforderliche Zeitfenster, sodass durch die mittels der Batteriespeichersysteme bereitgestellte Flexibilität weitere Betriebsstrategien für das Stromnetz ermöglicht werden.

Ein typisches Batteriespeichersystem weist eine Mehrzahl von elektrochemischen Energiespeichern auf. Hierbei können die Energiespeicher verteilt angeordnet sein (englisch: SWARM) oder konzentriert, sodass diese einen Großspeicher ausbilden, bei dem die einzelnen Energiespeicher (Untereinheiten) steuerbar sind (englisch: Racks). Hierbei wird die an das Energiesystem beziehungsweise das Batteriespeichersystem gestellte Lastanforderung auf die einzelnen Energiespeicher zu gleichen Teilen verteilt, sodass jeder der Energiespeicher die gleiche Teilleistung bereitstellt. Hierbei wird jeder Energiespeicher gleichermaßen belastet. Mit anderen Worten wird in bekannten virtuellen Speicherkraftwerken, wie es beispielsweise durch ein Batteriespeichersystem ausgebildet wird, die angeforderte Gesamtleistung gleichermaßen auf die einzelnen Energiespeicher des virtuellen Speicherkraftwerkes verteilt. Durch die gleichmäßige Belastung der einzelnen Energiespeicher wird jedoch die Lebensdauer des Energiesystems verringert.

Der vorliegenden Erfindung liegt die Aufgabe zugrunde, die Verteilung einer Gesamtleistung auf die einzelnen Energiespeicher eines Energiesystems zu verbessern.

Die Aufgabe wird durch ein Verfahren mit den Merkmalen des unabhängigen Patentanspruches 1 sowie durch ein Energiesystem mit den Merkmalen des unabhängigen Patentanspruches 7 gelöst. In den abhängigen Patentansprüchen sind vorteilhafte Ausgestaltungen und Weiterbildungen der Erfindung angegeben.

Bei dem erfindungsgemäßen Verfahren zum Betrieb eines Energiesystems mit wenigstens einem ersten und einem zweiten Energiespeicher, wird eine Lastanforderung an das Energiesystem durch eine Bereitstellung einer Gesamtleistung gedeckt. Weiterhin umfasst das erfindungsgemäße Verfahren wenigstens die folgenden die Schritte:

- Bereitstellen der Gesamtleistung mittels einer ersten Teilleistung, die durch den ersten Energiespeicher bereitgestellt wird, und mittels einer zweiten Teilleistung, die durch den zweiten Energiespeicher bereitgestellt wird; wobei
- jede der Teilleistungen in Abhängigkeit einer ladezustandsabhängigen Alterung des jeweiligen Energiespeichers ermittelt wird.

Eine ladezustandsabhängige Alterung eines Energiespeichers ist die Alterung des Energiespeichers, beispielsweise sein Kapazitätsverlust, bei einer Belastung des Energiespeichers bei einem bestimmten Ladezustand des Energiespeichers. Mit anderen Worten hängt die Alterung des Energiespeichers von seinem Ladezustand ab. Dies ist insbesondere bei elektrochemischen Energiespeichern der Fall.

Das Energiesystem ist insbesondere als virtuelles Speicherkraftwerk ausgebildet. Weiterhin kann das Energiesystem als Batteriespeichersystem ausgebildet sein, sodass die Energiespeicher als elektrochemische Energiespeicher, insbesondere als Batterien oder als Akkumulatoren, ausgebildet sind.

Gemäß der vorliegenden Erfindung wird die angeforderte Gesamtleistung (Lastanforderung) derart auf die Energiespeicher aufgeteilt, dass die Aufteilung in Abhängigkeit der ladezustandsabhängigen Alterung des jeweiligen Energiespeichers erfolgt. Mit anderen Worten wird vorteilhafterweise die Alterung des Energiespeichers bei seinem aktuellen Ladezustand, der bei der Lastanforderung vorliegt, bei der Ermittlung der Teilleistungen berücksichtigt.

Weist beispielsweise der erste Energiespeicher einen Ladezustand auf, bei welchem eine erhöhte Alterung des ersten Energiespeichers erfolgt, und der zweite Energiespeicher einen Ladezustand auf, bei welchem eine typische Alterung des zweiten Energiespeichers erfolgt, so ist - soweit physikalisch möglich - die erste Teilleistung geringer als die zweite Teilleistung. Hierbei bedeutet soweit physikalisch möglich, dass die Summe der Teilleistungen die Gesamtleistung ergeben muss. Mit anderen Worten wird der erste Energiespeicher weniger belastet als der zweite Energiespeicher. Dadurch wird vorteilhafterweise die Alterung des ersten Energiespeichers verringert, wodurch vorteilhafterweise die Alterung des Energiesystems ebenfalls verringert wird.

Mit anderen Worten wird erfindungsgemäß ein in Bezug auf die Alterung des Energiesystems optimierter Betrieb des Energiesystems bereitgestellt. Da die Alterung eines Energiespeichers durch einen Kapazitätsverlust gekennzeichnet ist, wird dadurch vorteilhafterweise die nutzbare Kapazität erhöht.

Das erfindungsgemäße Energiesystem umfasst wenigstens einen ersten und zweiten Energiespeicher, insbesondere einen ersten und zweiten elektrochemischen Energiespeicher, sowie ein Steuerelement. Das erfindungsgemäße Energiesystem ist dadurch gekennzeichnet, dass das Steuerelement zur Durchführung eines Verfahrens gemäß der vorliegenden Erfindung und/oder einer ihrer Ausgestaltungen ausgebildet ist.

Mit anderen Worten umfasst das erfindungsgemäße Energiesystem ein intelligentes Steuerelement, welches vorteilhafterweise die Alterung der Energiespeicher und somit die Alterung des Energiesystems verringert.

Es ergeben sich zum erfindungsgemäßen Verfahren gleichartige und gleichwertige Vorteile des erfindungsgemäßen Energiesystems.

Weiterhin ist es besonders bevorzugt ein Verfahren gemäß der vorliegenden Erfindung oder einer ihrer Ausgestaltungen und/oder ein Energiesystem gemäß der vorliegenden Erfindung und/oder einer ihrer Ausgestaltungen bei einem Energiemanagementverfahren beziehungsweise in einem Energiemanagementsystem, beispielsweise eines Gebäudes oder eines Energiemarktes, zu verwenden.

Gemäß einer vorteilhaften Ausgestaltung der Erfindung wird jede der Teilleistungen mittels eines Gewichtungsfaktors ermittelt, wobei der Gewichtungsfaktor über die ladezustandsabhängige Alterung des zugehörigen Energiespeichers vom Ladezustand SOC (englisch: State of Charge; abgekürzt SOC) des Energiespeichers abhängig ist.

Mit anderen Worten wird jedem Energiespeicher ein Gewichtungsfaktors und somit eine Gewichtung zugeordnet. Mittels der Gewichtungsfaktoren werden die zugehörigen Teilleistungen ermittelt. Hierbei sind die Gewichtungsfaktoren von der ladezustandsabhängigen Alterung abhängig. Dadurch sind die Gewichtungsfaktoren ebenfalls vom Ladezustand des zugeordneten Energiespeichers abhängig, wobei diese Abhängigkeit über die Alterung gegeben ist.

Mit anderen Worten sind die Gewichtungsfaktoren von der Alterung des zugehörigen Energiespeichers abhängig, wobei die Alterung wiederum vom Ladezustand des zugehörigen Energiespeichers abhängig ist. Für den Gewichtungsfaktor $g_i$ des Energiespeichers $i$ gilt somit $g_i = g_i(A_i) = g_i(A_i(SOC)) = g_i(SOC)$, wobei $A_i(SOC)$ die Alterung des Energiespeichers $i$ beim Ladezustand SOC des Energiespeichers $i$ kennzeichnet.

Die Teilleistungen $P_i$ sind beispielsweise durch $P_i = g_i P_{ges}$ ermittelt, wobei $P_{ges}$ die Gesamtleistung bezeichnet. Hierbei gilt die Normierung $\sum_i g_i = 1$, sodass sichergestellt ist, dass die Summe der Teilleistungen die angeforderte Gesamtleistung bereitstellt. Mit anderen Worten ist $P_{ges} = \sum_i P_i$.

In einer vorteilhaften Ausgestaltung der Erfindung wird der Gewichtungsfaktor $g_i$ des Energiespeichers $i$ mittels $g_i(SOC) = G_i(SOC)/\sum_i G_i(SOC)$ bereitgestellt, wobei $G_i(SOC) = 1 - A_i(SOC)/a_i$ ist, $a_i$ eine Konstante und $A_i(SOC)$ die ladezustandsabhängige Alterung des Energiespeichers $i$ bezeichnet.

Mit anderen Worten wird der Gewichtungsfaktor vorteilhafterweise mittels einer linearen Abhängigkeit aus der ladezustandsabhängigen Alterung des Energiespeichers ermittelt. Hierbei kann die Konstante $a_i$ eine maximale Alterung $A_i^{\max} = a_i$ des Energiespeichers kennzeichnen. Die Größen $G_i$ entsprechen im Wesentlichen, das heißt bis auf die Normierung, den Gewichtungsfaktoren $g_i$. Die ladezustandsabhängige Alterung $A_i(SOC)$ sowie die Konstante $\alpha_i$ können mittels Messungen bestimmt und erfasst werden.

Gemäß einer vorteilhaften Ausgestaltung der Erfindung werden die folgenden weiteren Schritte ausgeführt:

- Bestimmen der Ladezustände der Energiespeicher;
- Bereitstellen der Gewichtungsfaktoren der Energiespeicher in Abhängigkeit ihres bestimmten Ladezustandes; und
- Ermitteln der Teilleistungen mittels der bereitgestellten Gewichtungsfaktoren und der Gesamtleistung.

Mit anderen Worten werden zur Bereitstellung der Gesamtleistung zunächst die Ladezustände der Energiespeicher bestimmt. Dies kann jeweils mittels einer Messung erfolgen. Anschließend werden die Gewichtungsfaktoren der Energiespeicher in Abhängigkeit der bestimmten Ladezustände bereitgestellt. Aus den Gewichtungsfaktoren und der angeforderten Gesamtleistung werden - wie obenstehend beschrieben - die Teilleistungen ermittelt. Mit anderen Worten ist $P_{ges} = \sum_i P_i = \sum_i g_i P_{ges}$.

In einer vorteilhaften Weiterbildung der Erfindung wird die Abhängigkeit der Gewichtungsfaktoren vom Ladezustand des zugehörigen Energiespeichers diskret, funktional und/oder tabellarisch hinterlegt.

Dadurch kann die Abhängigkeit der Gewichtungsfaktoren vom Ladezustand des zugehörigen Energiespeichers vorab, beispielsweise mittels einer oder mehrerer Messungen ermittelt werden. Die Hinterlegung kann mittels eines Speicherelementes des Energiesystems erfolgen. Dadurch sind vorteilhafterweise bei einem Betrieb des Energiesystems lediglich die Ladezustände der Energiespeicher zu ermitteln, wobei aus den ermittelten Ladezuständen und mittels der hinterlegten Abhängigkeit der Gewichtungsfaktoren vorteilhaftweise die Teilleistungen, mit welchen die einzelnen Energiespeicher belastet werden, ermittelt werden können.

Gemäß einer vorteilhaften Ausgestaltung der Erfindung wird das Energiesystems zur Erbringung einer primären Regelleistung für ein Stromnetz verwendet.

Hierzu ist das Energiesystem vorteilhafterweise mit dem Stromnetz zum Leistungsaustausch zur Erbringung einer primären Regelleistung gekoppelt.

Die Erbringung einer primären Regelleistung erfordert eine stetig veränderte Belastung der Energiespeicher des Energiesystems. Das Energiesystem gemäß der vorliegenden Erfindung oder einer ihrer Ausgestaltung ist zur Erbringung der primären Regelleistung daher besonders vorteilhaft, da dessen Alterung durch die vorliegenden Erfindung oder einer ihrer Ausgestaltungen verringert wird.

In einer vorteilhaften Weiterbildung der Erfindung umfasst das Steuerelement ein Speicherelement zur Bereitstellung der über die ladezustandsabhängige Alterung vom Ladezustand des jeweiligen Energiespeichers abhängigen Gewichtungsfaktoren.

Weiterhin ist es vorteilhaft, wenn das Steuerelement zum Datenaustausch mit einer Datenwolke (englisch: Cloud) gekoppelt ist.

Dadurch wird vorteilhafterweise eine datenwolkenbasierte Steuerung des Betriebes des Energiesystems ermöglicht. Insbesondere ist die Anbindung des Energiesystems beziehungsweise die datenbasierte Kopplung des Steuerelementes mit MindSphere vorteilhaft.

Gemäß einer vorteilhaften Ausgestaltung der Erfindung ist der erste und/oder zweite Energiespeicher als ein Lithium-Ionen-Akkumulator, ein Bleiakkumulator, ein Nickelakkumulator, eine Redox-Flussbatterie, ein Kondensator, insbesondere ein Superkondensator (englisch: Supercap), ein Doppelschichtkondensator und/oder ein Lithiumkondensator, ein Schwungrad und/oder ein Elektrolyseur ausgebildet.

Insbesondere ist eine Kombination eines elektrochemischen Energiespeichers, beispielsweise einer Batterie mit einer Energiesenke, beispielsweise einem Elektrolyseur oder Power2X, vorteilhaft.

Dadurch wird vorteilhafterweise ein in Bezug auf die Alterung verbesserter Betrieb einer Vielzahl von Energiesystemen ermöglicht.

Weitere Vorteile, Merkmale und Einzelheiten der Erfindung ergeben sich aus dem im Folgenden beschriebenen Ausführungsbeispielen sowie anhand der Zeichnungen. Dabei zeigen schematisiert:

Figur 1 eine Abhängigkeit eines Gewichtungsfaktors vom Ladezustand eines Energiespeichers; und

Figur 2 ein Flussdiagramm des erfindungsgemäßen Verfahrens;

Gleichartige, gleichwertige oder gleichwirkende Elemente können in einer der Figuren oder in den Figuren mit denselben Bezugszeichen versehen sein.

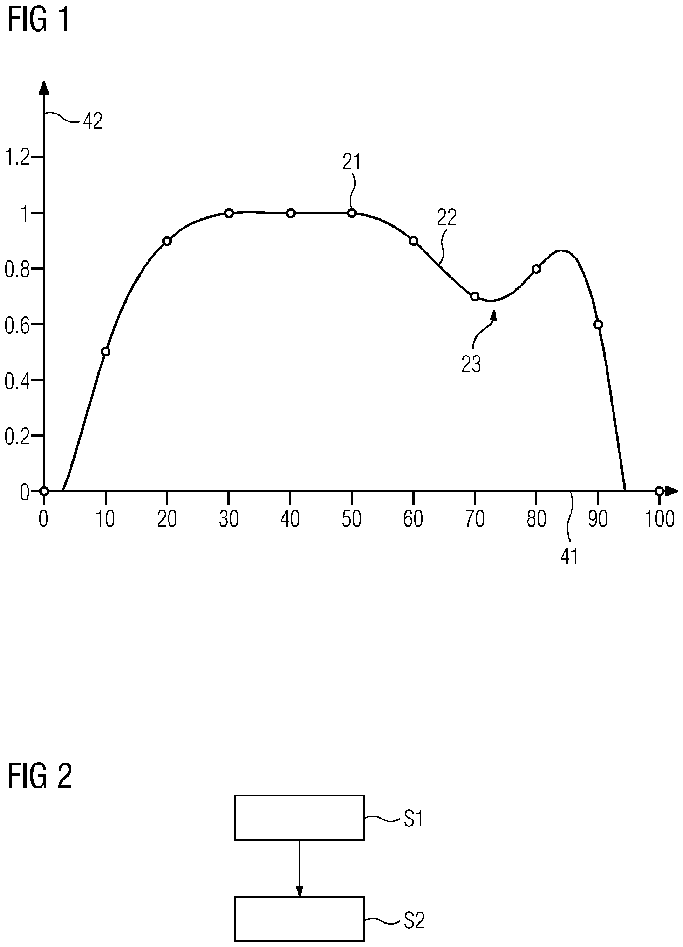

Die Figur 1 stellt eine exemplarische Abhängigkeit eines Gewichtungsfaktors vom Ladezustand eines Energiespeichers dar.

An der Abszisse 41 des dargestellten Diagramms ist der Ladezustand des Energiespeichers in Prozent aufgetragen. An der Ordinate 42 des dargestellten Diagramms ist im Wesentlichen der Gewichtungsfaktor, das heißt bis auf seine Normierung, aufgetragen. Mit anderen Worten ist an der Ordinate 42 $G_i$ aufgetragen, wobei der Gewichtungsfaktor durch $g_i = G_i/\sum_i G_i$ gegeben ist. Der Ausdruck $\sum_i G_i$ entspricht der genannten

Normierung, die sicherstellt, dass $\sum_i g_i = 1$ ist.

Die dargestellte Abhängigkeit wurde mittels einer Mehrzahl von Messwerten 21 ermittelt. Die Mehrzahl der Messwerte bildet eine Messkurve 22 aus, die beispielsweise aus den diskreten Messwerten 21 durch Interpolation ermittelt wird. Die Messwerte können über eine Messung der ladezustandsabhängigen Alterung $A_i$(SOC) des Energiespeichers ermittelt werden, beispielsweise mittels $G_i$(SOC) = 1 - $A_i$(SOC)/$a_i$, wobei $a_i$ eine Konstante bezeichnet.

Die dargestellte Messkurve 22 weist in diesem Ausführungsbeispiel ein Minimum 23 auf. Hierbei ist die Messkurve 22 beziehungsweise das Minimum 23 derart zu interpretieren, dass die Alterung im Bereich des Minimums 23 beziehungsweise im Bereich des zum Minimum 23 zugehörigen Ladezustandes erhöht ist. Mit anderen Worten weist der Energiespeicher gemäß der dargestellten Messkurve 23 im Bereich um einen Ladezustand von 70 Prozent (SOC = 0,7) eine erhöhte Alterung auf. Erfolgt somit eine Anforderung an den Energiespeicher bei einem Ladezustand im Bereich um 70 Prozent, so wird der Energiespeicher geringer gewichtet, das heißt er trägt weniger zur Gesamtleistung bei. Die verringerte Gewichtung ist durch einen geringeren Wert des Gewichtungsfaktors, der dem Minimum 23 entspricht, gekennzeichnet.

Die Figur 2 zeigt ein Flussdiagramm des erfindungsgemäßen Verfahrens.

In einem ersten Schritt des erfindungsgemäßen Verfahrens zum Betrieb eines Energiesystems mit wenigstens einem ersten und einem zweiten Energiespeicher wird eine Gesamtleistung mittels einer ersten Teilleistung die durch den ersten Energiespeicher bereitgestellt wird, und mittels einer zweiten Teilleistung, die mittels des zweiten Energiespeichers bereitgestellt wird, bereitgestellt. Hierbei ist die Gesamtleistung zur Deckung einer Lastanforderung an das Energiesystem vorgesehen. Mit anderen Worten wird die Gesamtleistung mittels der Teilleistungen auf die einzelnen Energiespeicher des Energiesystems aufgeteilt, wobei die Summe der Teilleistungen die Gesamtleistung ergibt.

Ein Grundgedanke der vorliegenden Erfindung äußert sich im zweiten Schritt des erfindungsgemäßen Verfahrens in dem jede der Teilleistungen in Abhängigkeit einer ladezustandsabhängigen Alterung des jeweiligen Energiespeichers ermittelt wird. Mit anderen Worten wird vorteilhafterweise die Alterung, die der Energiespeicher bei seinem Ladezustand, den er bei Anforderung der Gesamtlast aufweist, bei der Bestimmung der Teilleistung, mit welcher er belastet wird, berücksichtigt. Mit anderen Worten werden Energiespeicher, die eine erhöhte Alterung aufweisen, möglichst wenig belastet. Dadurch wird vorteilhafterweise die Alterung des Energiesystems insgesamt verringert.

Die vorliegende Erfindung ermöglicht somit einen alterungsschonenden Betrieb eines Energiesystems mit einer Mehrzahl von Energiespeichern, insbesondere mit einer Mehrzahl von elektrochemischen Energiespeichern.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

**Patentansprüche**

1. Verfahren zum Betrieb eines Energiesystems mit wenigstens einem ersten und einem zweiten Energiespeicher, bei dem eine Lastanforderung an das Energiesystem durch eine Bereitstellung einer Gesamtleistung gedeckt wird, umfassend die Schritte:

   - Bereitstellen der Gesamtleistung mittels einer ersten Teilleistung, die durch den ersten Energiespeicher bereitgestellt wird, und mittels einer zweiten Teilleistung, die durch den zweiten Energiespeicher bereitgestellt wird;
   **dadurch gekennzeichnet, dass**
   - jede der Teilleistungen in Abhängigkeit einer ladezustandsabhängigen Alterung des jeweiligen Energiespeichers ermittelt wird.

2. Verfahren gemäß Anspruch 1, bei dem jede der Teilleistungen mittels eines Gewichtungsfaktors ermittelt wird, wobei der Gewichtungsfaktor über die ladezustandsabhängige Alterung des zugehörigen Energiespeichers vom Ladezustand SOC des Energiespeichers abhängig ist.

3. Verfahren gemäß Anspruch 2, bei dem der Gewichtungsfaktor $g_i$ des Energiespeichers $i$ mittels $g_i(SOC)$ = $G_i(SOC)/\sum_i G_i(SOC)$ bereitgestellt wird, wobei $G_i(SOC) = 1 - A_i(SOC)/a_i$ ist, $a_i$ eine Konstante und $A_i(SOC)$ die ladezustandsabhängige Alterung des Energiespeichers $i$ bezeichnet.

4. Verfahren gemäß Anspruch 2 oder 3, mit den weiteren Schritten:

   - Bestimmen der Ladezustände der Energiespeicher;
   - Bereitstellen der Gewichtungsfaktoren der Energiespeicher in Abhängigkeit ihres bestimmten Ladezustandes; und
   - Ermitteln der Teilleistungen mittels der bereitgestellten Gewichtungsfaktoren und der Gesamtleistung.

5. Verfahren gemäß einem der Ansprüche 2 bis 4, bei dem die Abhängigkeit der Gewichtungsfaktoren vom Ladezustand des zugehörigen Energiespeichers diskret, funktional und/oder tabellarisch hinterlegt wird.

6. Verfahren gemäß einem der vorhergehenden Ansprüche, bei dem das Energiesystems zur Erbringung einer primären Regelleistung für ein Stromnetz verwendet wird.

7. Energiesystem, umfassend einen ersten und zweiten Energiespeicher sowie ein Steuerelement, **dadurch gekennzeichnet, dass** das Steuerelement zur Durchführung eines Verfahrens gemäß einem der Ansprüche 1 bis 6 ausgebildet ist.

8. Energiesystem gemäß Anspruch 7, **dadurch gekennzeichnet, dass** das Steuerelement ein Speicherelement zur Bereitstellung der über die ladezustandsabhängige Alterung vom Ladezustand des jeweiligen Energiespeichers abhängigen Gewichtungsfaktoren umfasst.

9. Energiesystem gemäß Anspruch 7 oder 8, **dadurch gekennzeichnet, dass** das Steuerelement zum Datenaustausch mit einer Datenwolke gekoppelt ist.

10. Energiesystem gemäß einem der Ansprüche 7 bis 9, **dadurch gekennzeichnet, dass** der erste und/oder zweite Energiespeicher als ein Lithium-Ionen-Akkumulator, ein Bleiakkumulator, ein Nickelakkumulator, eine Redox-Flussbatterie, ein Kondensator, ein Schwungrad und/oder ein Elektrolyseur ausgebildet ist.

11. Energiesystem gemäß einem der Ansprüche 7 bis 10, **dadurch gekennzeichnet, dass** das Energiesystem mit einem Stromnetz zum Leistungsaustausch zur Erbringung einer primären Regelleistung gekoppelt ist.

FIG 1

FIG 2

Europäisches
Patentamt

European
Patent Office

Office européen
des brevets

**EUROPÄISCHER RECHERCHENBERICHT**

Nummer der Anmeldung

EP 19 15 3662

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2016/114147 A1 (NEC CORP [JP]) 21. Juli 2016 (2016-07-21) * Absätze [0012] - [0014], [0017] - [0110]; Abbildungen 1, 2 * & US 2018/269541 A1 (KOBAYASHI KENJI [JP] ET AL) 20. September 2018 (2018-09-20) * Absätze [0013] - [0015], [0028] - [0128]; Abbildungen 1, 2 * ----- | 1-11 | INV. H02J3/32 H02J7/00 |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 8. März 2019 | Telega, Pawel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 15 3662

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2019

| Im Recherchenbericht angeführtes Patentdokument | Datum der Veröffentlichung | Mitglied(er) der Patentfamilie | Datum der Veröffentlichung |
|---|---|---|---|
| WO 2016114147 A1 | 21-07-2016 | JP WO2016114147 A1<br>US 2018269541 A1<br>WO 2016114147 A1 | 26-10-2017<br>20-09-2018<br>21-07-2016 |

EPO FORM P0461

Für nähere Einzelheiten zu diesem Anhang : siehe Amtsblatt des Europäischen Patentamts, Nr.12/82